# FASCICULE DE BREVET EUROPEEN

(11) **EP 2 819 909 B1**
(45) Date de publication et mention de la délivrance du brevet: **11.05.2016**
(21) Numéro de dépôt: 13708731.8
(22) Date de dépôt: 27.02.2013
(51) Int. Cl.: B62B 5/00, B62B 1/12, B62B 5/06, B62B 5/02

(54) **CHARIOT DE TRANSPORT TRANSFORMABLE À PAIRE DE JAMBES RABATTABLES ET ROUES RABATTABLES SIMULTANÉMENT**
KONVERTIERBARE TRANSPORTVORRICHTUNG DEREN GRIFF UND RÀDERN GLEICHZEITIG ZUSAMMENKLAPPBAR SIND
CONVERTIBLE HAND CART WITH SIMULTANEOUSLY FOLDABLE HAND BAR AND WHEELS

(30) Priorité: 01.03.2012 FR 1251885
(43) Date de publication de la demande: 07.01.2015
(73) Titulaire: Peugeot Citroën Automobiles SA, 78140 Vélizy Villacoublay (FR); Herbault, Patrick, 92250 La Garenne Colombes (FR)
(72) Inventeur: HERBAULT, Patrick, F-92250 La Garenne Colombes (FR); MARQUES, Frédéric, F-94370 Sucy en Brie (FR); SAULNIER, Fabien, F-94270 Le Kremlin Bicêtre (FR)
(86) Numéro de dépôt international: PCT/EP2013/053956
(87) Numéro de publication internationale: WO 2013/127873

(56) Documents cités:
- WO-A1-2011/097419
- WO-A1-2012/049389
- FR-A1- 2 681 827
- FR-A1- 2 794 417
- US-A- 4 274 644
- US-A1- 2010 066 057
- US-A1- 2010 140 889
- US-B1- 6 386 558

## Description

L'invention concerne les chariots de transport qui sont utilisés pour transporter des charges et qui peuvent être transformés afin de pouvoir être entreposés ou déposés, éventuellement avec leur charge(s).

On entend ici par « chariot de transport » un système (ou appareil) transformable, comprenant une paire de jambes sensiblement parallèles entre elles, pouvant rouler lorsqu'il est tiré ou poussé et pouvant supporter au moins une charge. Par conséquent, il pourra s'agir d'un diable, d'un chariot de course, d'une poussette ou d'un élément modulaire de faux-plancher de véhicule, par exemple.

Par ailleurs, dans ce qui suit le mot « charge » désigne tout corps pesant, qu'il s'agisse d'une personne (bébé, enfant, adulte), d'un animal, d'un végétal ou d'un objet.

Comme le sait l'homme de l'art, certains chariots de transport du type précité comprennent, d'une part, une paire de jambes comportant des extrémités inférieures auxquelles sont respectivement couplées des platines sur lesquelles sont montées à rotation suivant une direction transversale des roues, et, d'autre part, des moyens de support de charge(s) couplés aux extrémités inférieures des jambes.

Afin de réduire l'encombrement de ces chariots de transport, notamment lorsqu'ils ne sont pas utilisés, plusieurs solutions ont été proposées. Ainsi, il a été proposé de rabattre leurs platines (et donc leurs roues) grâce à un entraînement en rotation suivant une direction verticale. Il a également été proposé d'adjoindre au chariot de transport un mécanisme destiné à transformer l'inclinaison de ses premiers moyens de support de charge(s) en un entraînement en rotation de ses roues au moyen d'un système de renvoi d'angle à engrenage simplifié et/ou d'un système fonctionnellement équivalent au précédent, par exemple de type rampes ou barres de liaison. Il a également été proposé, notamment dans le document brevet US 6,386,558, un chariot de course dans lequel les moyens de support de charge(s) sont agencés sous la forme d'un cadre fixe et les platines (et donc les roues) peuvent être rabattues horizontalement sous le cadre. Il a également été proposé, notamment dans le document brevet JP 52119662U, un chariot de course dont la partie supérieure des jambes est démontable et dont les jambes peuvent pivoter latéralement une fois la partie supérieure retirée, et dans lequel les moyens de support de charge(s) sont agencés sous la forme d'un cadre qui peut être rabattu contre les jambes et sur lequel sont montés à rotation les platines (et donc les roues) afin que ces dernières puissent être rabattues dans ce cadre.

On connait également du document US2010/140889 un chariot conforme au préambule de la revendication 1.

Ces chariots n'apportent pas entièrement satisfaction du fait qu'ils sont encore relativement encombrants une fois repliés et/ou qu'ils nécessitent plusieurs opérations manuelles pour être repliés, que dans tous les cas ils ne peuvent pas être repliés lorsqu'ils supportent une charge, et qu'une fois repliés ils ne peuvent généralement pas servir à supporter une charge.

L'invention a donc notamment pour but de proposer une solution alternative qui ne présente pas tout ou partie des inconvénients précités.

Elle propose notamment à cet effet un chariot de transport conforme à la revendication 1.

L'expression « sous charge » signifie non seulement en présence d'une charge sur la structure de support, mais également sous l'effet du propre poids du chariot de transport.

Grâce à l'invention, les inclinaisons des jambes et des roues étant couplées, une unique opération peut permettre de replier ou déplier le chariot de transport, tout en lui conférant une fois replié une grande compacité.

Le chariot de transport selon l'invention peut comporter en outre d'autres caractéristiques qui peuvent être prises séparément ou en combinaison, et notamment :
- il peut comprendre deux pieds associés respectivement aux platines et agencés pour stabiliser le chariot lorsqu'il est à l'arrêt ;
   ➢ les premiers moyens de support de charge(s) peuvent être solidarisés aux pieds ;
   ➢ les pieds peuvent être montés à rotation sur les premiers moyens de couplage de sorte qu'ils puissent passer d'une position redressée adaptée à la stabilisation à une position rabattue sensiblement parallèle aux jambes rabattues ;
      - les seconds moyens de couplage peuvent être agencés pour contraindre les platines et les pieds à être sensiblement simultanément soit dans leur position rabattue, soit dans leur position redressée ;
- selon l'invention les seconds moyens de couplage comportent une structure de Sarrus couplée aux extrémités inférieures des jambes ;
   ➢ les premiers moyens de support de charge(s) sont agencés sous la forme d'une plaque en forme générale de U. Les premiers moyens de couplage comprennent deux charnières comportant chacune une première partie solidarisée fixement à l'extrémité inférieure de l'une des jambes et une seconde partie montée à rotation sur cette première partie et sur laquelle est montée à rotation une extrémité de la plaque. Par ailleurs, les seconds moyens de couplage comportent deux articulations comportant chacune une première partie montée à rotation sur la première partie de l'une des charnières, une deuxième partie montée à rotation sur cette première partie et une troisième partie montée à rotation sur cette deuxième partie et sur laquelle sont montées à rotation l'une des platines et une autre extrémité de la plaque ;
- chaque platine peut être couplée aux premiers moyens de couplage via un mécanisme de redressement de type Scott-Russell ;
- dans un premier mode de réalisation les premiers moyens de support de charge(s) peuvent être montés à rotation sur les premiers moyens de couplage de sorte qu'ils puissent passer d'une position redressée sensiblement perpendiculaire aux jambes à une position rabattue sensiblement parallèle aux jambes rabattues ;
   ➢ les premiers moyens de couplage peuvent comprendre un ensemble rigide de fixation sur lequel sont respectivement montés à rotation les jambes, les platines et les premiers moyens de support de charge(s). Dans ce cas, les seconds moyens de couplage peuvent être agencés pour contraindre les roues et les premiers moyens de support de charge(s) à être sensiblement simultanément soit dans leur position rabattue, soit dans leur position redressée ;
- dans un deuxième mode de réalisation les premiers moyens de couplage peuvent comprendre au moins deux plaques sur lesquelles sont respectivement montées à rotation les jambes et les platines. Dans ce cas, les premiers moyens de support de charge(s) peuvent être solidarisés fixement aux plaques ;
- dans ces premier et deuxième modes de réalisation les premiers moyens de support de charge(s) peuvent être agencés sous la forme de deux lames ;
- dans un troisième mode de réalisation, chaque jambe peut comprendre deux montants qui, d'une part, comportent deux extrémités supérieures solidarisées respectivement à une partie longitudinale correspondante et deux extrémités inférieures couplées à rotation aux premiers moyens de couplage, et, d'autre part, participent avec cette partie longitudinale à la définition d'un parallélépipède déformable dans lequel les montants sont rabattables sensiblement parallèlement à la partie longitudinale ;
   ➢ les premiers moyens de couplage peuvent comprendre deux barres longitudinales sur chacune desquelles sont montées à rotation suivant la direction transversale les extrémités inférieures des deux montants d'une jambe ;
      - les barres longitudinales peuvent définir une partie au moins des premiers moyens de support de charge(s) ;
      - en variante, les barres longitudinales peuvent comporter chacune une partie avant à laquelle est solidarisée une partie des premiers moyens de support de charge(s) ;
         ∘ les premiers moyens de support de charge(s) peuvent être montés à rotation sur les barres longitudinales de sorte qu'ils puissent passer d'une position redressée d'accueil de charge(s) à une position rabattue sensiblement parallèle aux jambes rabattues ;
            ▪ les seconds moyens de couplage peuvent être agencés pour contraindre les platines et les premiers moyens de support de charge(s) à être sensiblement simultanément soit dans leur position rabattue, soit dans leur position redressée ;
         ∘ les premiers moyens de support de charge(s) peuvent être agencés sous la forme de deux lames ;
      - en variante, il peut comprendre des seconds moyens de support de charge(s) couplés aux parties longitudinales et/ou à certains des montants ;
         ∘ les seconds moyens de support de charge(s) peuvent être couplés aux parties longitudinales via des glissières ;
            ▪ les glissières peuvent être de type télescopique ;
      - dans une autre variante, il peut comprendre des seconds moyens de support de charge(s) couplés à rotation à l'un des deux montants de chacune des jambes de manière à pouvoir passer d'une position redressée sensiblement perpendiculaire aux jambes à une position rabattue sensiblement parallèle aux jambes ;
- chaque platine peut comporter un ensemble de trois roues agencées en triangle ;
- il peut constituer un élément modulaire de faux-plancher de véhicule.

L'invention propose également un véhicule, éventuellement de type automobile, et comprenant une partie arrière agencée de manière à recevoir au moins un chariot de transport du type de celui présenté ci-avant, après qu'il ait été configuré dans une position repliée de rangement.

La partie arrière d'un tel véhicule pourra comprendre des moyens de verrouillage propres à immobiliser dans une position choisie chaque chariot de transport configuré dans sa position repliée de rangement.

D'autres caractéristiques et avantages de l'invention apparaîtront à l'examen de la description détaillée ci-après, et des dessins annexés, sur lesquels :
- la figure 1 illustre de façon schématique et fonctionnelle, dans une vue de côté, un premier exemple de réalisation de chariot de transport selon l'invention en position déployée,
- la figure 2 illustre de façon schématique et fonctionnelle, dans une vue de face du côté arrière, le chariot de transport de la figure 1 en position déployée,
- la figure 3 illustre de façon schématique et fonctionnelle, dans une vue de côté, le chariot de transport de la figure 1 dans une étape intermédiaire d'une phase de repliement,
- la figure 4 illustre de façon schématique et fonctionnelle, dans une vue de côté, le chariot de transport de la figure 1 à la fin de la phase de repliement,
- la figure 5 illustre de façon schématique et fonctionnelle, dans une vue de côté, un deuxième exemple de réalisation de chariot de transport selon l'invention en position déployée,
- la figure 6 illustre de façon schématique et fonctionnelle, dans une vue de côté, un troisième exemple de réalisation de chariot de transport selon l'invention en position déployée,
- la figure 7 illustre de façon schématique et fonctionnelle, dans une vue de côté, un quatrième exemple de réalisation de chariot de transport selon l'invention en position déployée,
- la figure 8 illustre de façon schématique, dans une vue en perspective, une première variante du chariot de transport de la figure 7 en position déployée,
- la figure 9 illustre de façon schématique, dans une vue en perspective, une seconde variante du chariot de transport de la figure 7 en position déployée,
- la figure 10 illustre de façon schématique et fonctionnelle, dans une vue de côté, un cinquième exemple de réalisation de chariot de transport selon l'invention en position déployée,
- les figures 11 à 14 illustrent de façon schématique et fonctionnelle, dans des vues de côté, le chariot de transport de la figure 7 à différents stades d'une phase d'installation dans une partie arrière de véhicule,
- la figure 15 illustre de façon schématique, dans une vue en perspective, une partie d'un sixième exemple de réalisation de chariot de transport selon l'invention dans une position partiellement repliée, et
- les figures 16 à 18 illustrent de façon schématique et fonctionnelle, dans des vues en coupe dans un plan transversal, trois étapes d'une phase de redressement d'un exemple d'ensemble de roues d'un chariot de transport selon l'invention.

Les dessins annexés pourront non seulement servir à compléter l'invention, mais aussi contribuer à sa définition, le cas échéant.

L'invention a pour but d'offrir un chariot de transport CT, à une paire de jambes Jk (k = 1 ou 2), pouvant transporter des charges et être transformé afin de pouvoir être entreposé ou déposé, éventuellement avec ses charges.

Par exemple, et comme on le verra plus loin, le chariot de transport CT peut être un diable, un chariot de course ou un élément modulaire de faux-plancher de véhicule.

Dans ce qui suit, on considère, à titre d'exemple non limitatif, que les charges sont des objets (ou appareils) ou des végétaux. Mais, l'invention n'est pas limitée à ce type de charge. Elle concerne en effet tout type de corps pesant, qu'il s'agisse d'une personne, d'un animal, d'un végétal ou d'un objet.

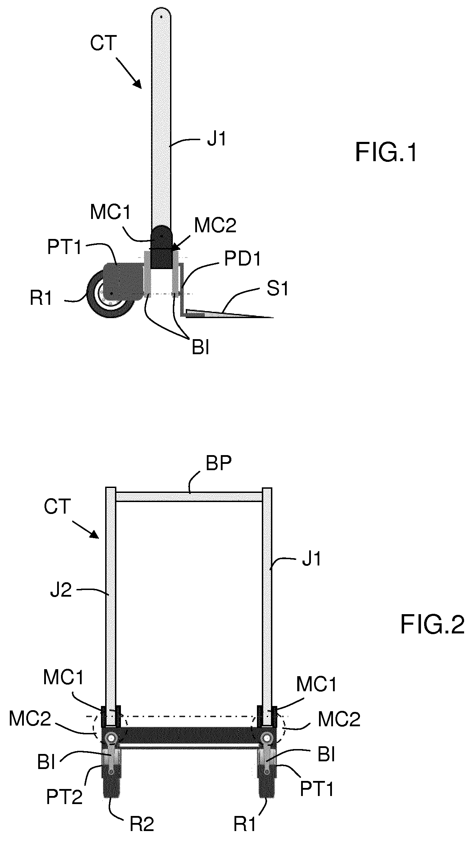

On se réfère tout d'abord aux figures 1 à 4 pour décrire un premier exemple de réalisation, non limitatif, de chariot de transport CT selon l'invention.

Comme illustré (au moins partiellement), un chariot de transport CT, selon l'invention, comprend au moins une paire de jambes Jk, des premiers moyens de support de charge(s) S1, des premiers moyens de couplage MC1 et des seconds moyens de couplage MC2.

Les premiers moyens de support de charge(s) S1 sont agencés de manière à supporter au moins une charge C1, éventuellement logée dans un casier (ou coffre ou panier), dont les dimensions sont éventuellement adaptées à ses propres dimensions. On notera que dans l'exemple non limitatif illustré sur les figures 1 à 4, les premiers moyens de support de charge(s) S1 sont agencés sous la forme de deux lames s'étendant suivant une direction longitudinale. Mais cela n'est pas obligatoire. Il pourrait en effet s'agir d'un cadre (éventuellement muni de traverses et/ou longerons de rigidification) ou bien d'un plateau (éventuellement ajouré localement). A noter que le dispositif suivant l'invention peut être le constituant avant ou arrière d'un structure pliable, à titre d'exemple un chariot pour lequel le support de charge S1 est le plateau inférieur ou une poussette, un landau pour lequel le support de charge S1 est le panier inférieur positionné environ à hauteur des roues.

Les deux jambes Jk de l'unique paire comprennent chacune au moins un montant. Ces deux jambes Jk sont sensiblement parallèles et comprennent chacune une extrémité inférieure à laquelle est couplée une platine PTk sur laquelle est montée à rotation suivant une direction transversale (perpendiculaire à la direction longitudinale) au moins une roue Rk.

Chaque roue Rk peut éventuellement être entraînée en rotation sur 360°. Le diamètre des roues Rk dépend de l'application visée. Par exemple, si le chariot de transport CT doit pouvoir supporter des charges relativement lourdes et circuler sur des terrains de différents types, il est avantageux que le diamètre des roues Rk soit sensiblement égal à 12,5 cm. Mais d'autres diamètres peuvent être envisagés.

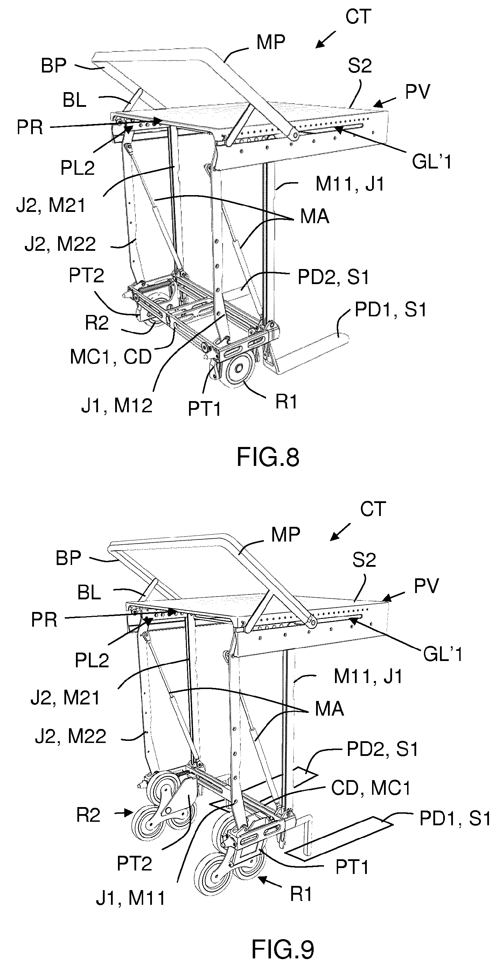

On notera que dans les exemples de réalisation illustrés sur les figures 1 à 8 et 10 à 18, chaque platine PTk ne supporte à rotation qu'une seule roue Rk. Mais cela n'est pas obligatoire. En effet, chaque platine PTk peut supporter à rotation plusieurs roues Rk. C'est notamment le cas dans l'exemple de réalisation illustré sur la figure 9, où chaque platine PTk supporte un système à trois roues montées en triangle (ou étoile), qui est particulièrement bien adapté au franchissement de marches. Dans ce cas, il faut que la hauteur de chaque système à trois roues, associé à une platine PTk, soit inférieure de quelques centimètres à la demi-largeur du chariot CT (par exemple 30 à 35 centimètres pour un chariot CT ayant une largeur de 60 à 70 cm).

Les extrémités supérieures des jambes Jk sont par exemple couplées entre elles par une barre de préhension BP.

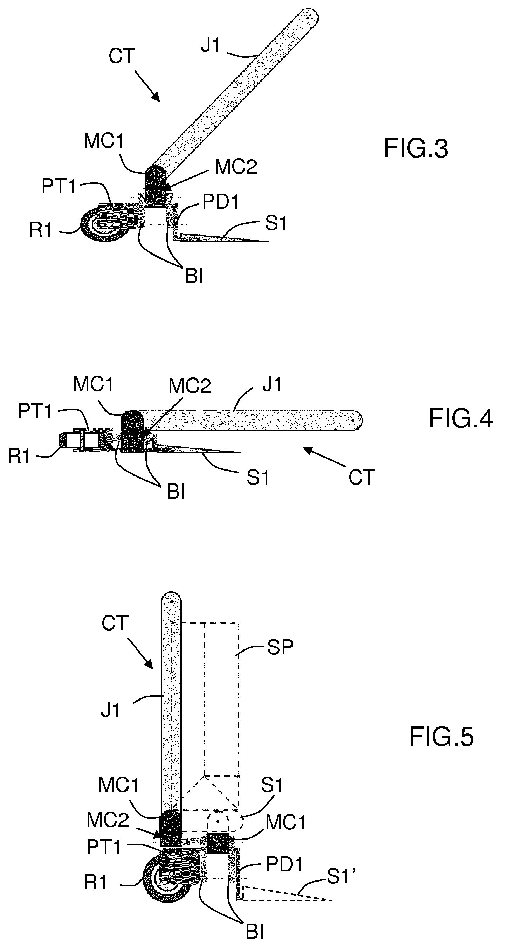

Les extrémités inférieures des jambes Jk sont couplées aux premiers moyens de support de charge(s) S1. Par ailleurs, ces extrémités inférieures des jambes Jk sont montées à rotation sur les premiers moyens de couplage MC1 suivant la direction transversale afin de pouvoir passer d'une position redressée (illustrée sur les figures 1 et 2) à une position rabattue (illustrée sur la figure 4), en passant au moins par une position intermédiaire (illustrée sur la figure 3).

Les platines PTk sont également montées à rotation sur les premiers moyens de couplage MC1 afin que leurs roues Rk puissent pivoter sous charge et passer d'une position redressée (illustrée sur les figures 1 et 2) à une position rabattue (illustrée sur la figure 4), sensiblement parallèle aux jambes Jk (après que ces dernières (Jk) aient été rabattues), en passant par au moins une position intermédiaire (illustrée sur la figure 3).

On notera que chaque platine PTk est montée à rotation suivant la direction longitudinale.

On notera également que l'expression « sous charge » signifie ici non seulement en présence d'une charge sur les premiers moyens de support de charge(s) S1, mais également sous l'effet du propre poids du chariot de transport CT.

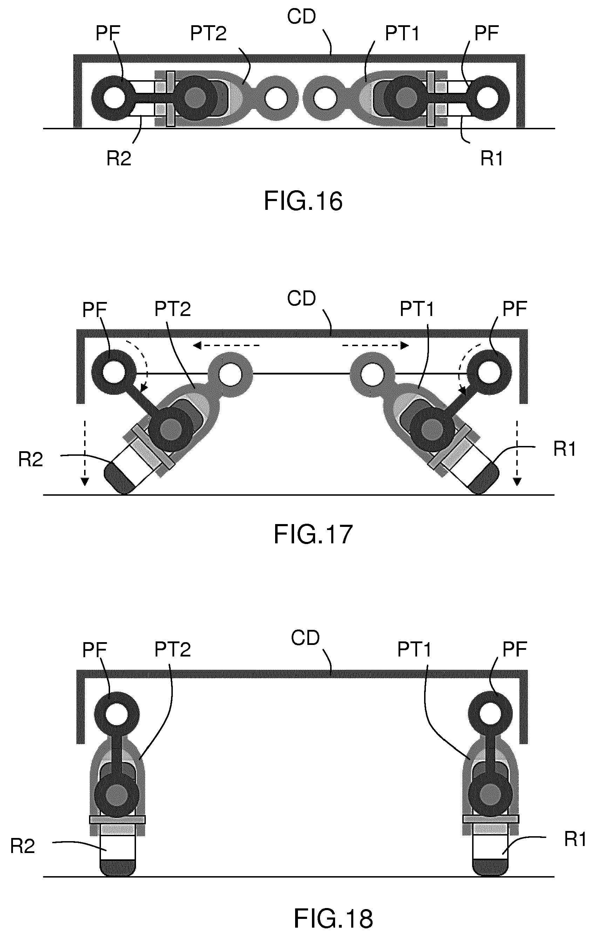

Tout mécanisme de pivotement des roues Rik sous charge, connu de l'homme de l'art, peut être ici utilisé. Un exemple d'un tel mécanisme est schématiquement et non limitativement illustré sur les figures 16 à 18. Dans cet exemple, chaque platine PTk, sur laquelle est montée à rotation une roue Rk, est solidarisée à rotation (suivant la direction longitudinale) à une patte de fixation PF qui est elle-même solidarisée à rotation (suivant la direction longitudinale), directement ou indirectement, à un cadre CD. Cela permet de rigidifier le chariot de transport CT tout en augmentant sa stabilité lorsqu'il est en position déployée ou redressée. Les roues Rk sont de préférence propres à pivoter sous charge suivant un axe de rotation longitudinal qui est positionné au plus près du sol, voire quasiment en coïncidence avec leur zone de contact.

Lorsque le chariot de transport CT est posé sur une surface (comme par exemple un plancher ou une chaussée) et que l'on exerce une pression de haut en bas sur les jambes Jk pour les rabattre vers l'avant ou l'arrière, cela provoque l'inclinaison progressive des platines PTk (avec leurs roues Rk), du fait qu'elles sont montées à rotation sur leurs pattes de fixation PF, jusqu'à ce qu'elles soient sensiblement parallèles aux jambes Jk. Des opérations inverses permettent de redresser les roues Rk. Un tel mécanisme, qui exploite une cinématique du type Scott-Russell, est notamment décrit dans le document brevet FR 2 965 781.

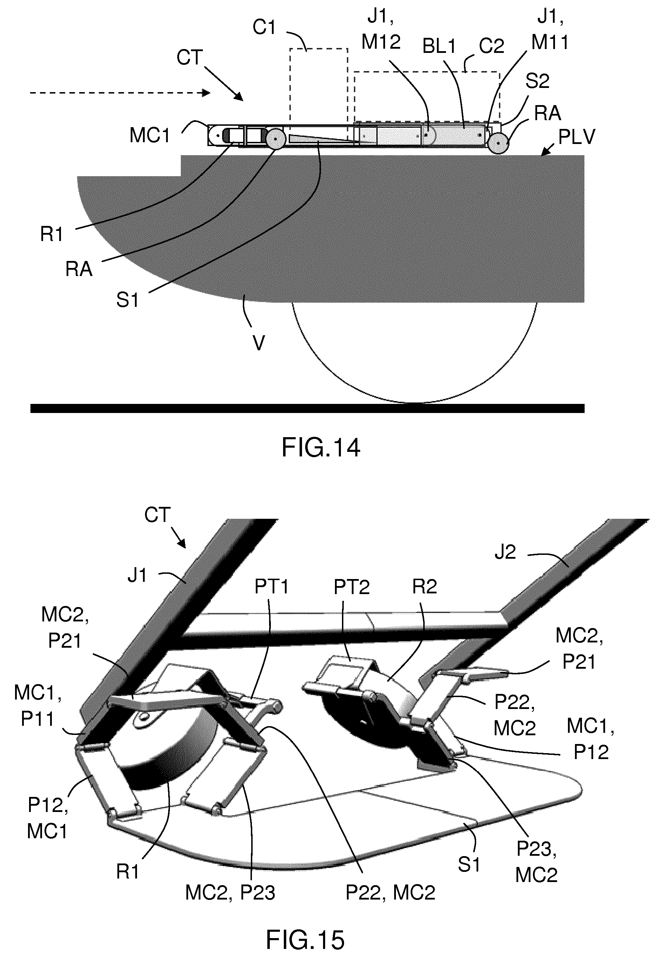

Les seconds moyens de couplage MC2 (seulement représentés intégralement dans l'exemple de réalisation de la figure 15) sont agencés pour contraindre les jambes Jk et les roues Rk à être sensiblement simultanément soit dans leur position rabattue, soit dans leur position redressée.

Conformément à l'invention et comme illustré sur la figure 15, les seconds moyens de couplage MC2 comportent deux articulations fonctionnant de concert avec deux charnières faisant partie des premiers moyens de couplage MC1 afin de constituer avec ces dernières une structure de Sarrus. On notera que dans cet exemple non limitatif les premiers moyens de support de charge(s) S1 sont agencés sous la forme d'une plaque en forme générale de U, et chaque charnière MC1 comporte une première partie P11 qui est solidarisée fixement à l'extrémité inférieure de l'une des deux jambes Jk, et une seconde partie P12 qui est montée à rotation sur cette première partie P11 et sur laquelle est montée à rotation l'une des deux extrémités de la plaque S1. Dans ce cas, chaque articulation comporte une première partie P21 qui est montée à rotation sur la première partie P11 de l'une des deux charnières MC1, une deuxième partie P22 qui est montée à rotation sur cette première partie P21, et une troisième partie P23 qui est montée à rotation sur cette deuxième partie P22 et sur laquelle sont montées à rotation l'une des deux platines PTk et l'autre extrémité de la plaque S1. On notera que dans cette structure, la deuxième partie P22 fait office de biellette (BI) et la troisième partie P23 fait office de pied (PDk). On notera également que, pour équilibrer les efforts longitudinaux, il est possible de compléter cette structure en ajoutant leur partie symétrique à l'avant, de chaque côté et en regard de la première partie P11 et de la deuxième partie P12.

On comprendra qu'avec une telle structure de Sarrus (ou analogue), lorsque l'on manipule les jambes Jk vers l'avant ou l'arrière, l'axe de rotation des jambes Jk s'abaisse ou s'élève ce qui augmente ou diminue du même angle l'inclinaison des platines PTk (et donc des roues Rk) et des premiers moyens de support de charge(s) S1 et/ou pieds PDk et permet de passer d'une position repliée (ou rabattue) à une position dépliée (ou déployée) sur un quart de tour.

On notera que la structure de Sarrus peut être éventuellement combinée à un mécanisme de redressement de type Scott-Russell.

On notera également qu'il est très avantageux que le chariot de transport CT comprenne deux pieds PDk associés respectivement aux platines PTk et agencés pour le stabiliser lorsqu'il est à l'arrêt. Comme illustré non limitativement sur les figures 1 à 9 et 11 à 14, les premiers moyens de support de charge(s) S1 peuvent être éventuellement solidarisés aux pieds PDk.

Par ailleurs, les pieds PDk peuvent être montés à rotation sur les premiers moyens de couplage MC1 de sorte qu'ils puissent passer d'une position redressée adaptée à la stabilisation à une position rabattue sensiblement parallèle aux jambes Jk rabattues. Dans ce cas, les seconds moyens de couplage MC2 peuvent être éventuellement agencés pour contraindre les platines PTk et les pieds PDk à être sensiblement simultanément soit dans leur position rabattue, soit dans leur position redressée. Mais les pieds PDk pourraient également être pliables longitudinalement en parallèle avec l'inclinaison des jambes Jk, voire directement issus de leur prolongement.

Dans l'exemple de réalisation illustré sur les figures 1 à 4, le chariot de transport CT est un diable muni de premiers moyens de support de charge(s) S1 qui sont montés à rotation sur les premiers moyens de couplage MC1 afin qu'ils puissent passer d'une position redressée sensiblement perpendiculaire aux jambes Jk à une position rabattue sensiblement parallèle aux jambes Jk (après que ces dernières (Jk) aient été rabattues).

Dans cet exemple non limitatif, les premiers moyens de couplage MC1 comprennent un ensemble de fixation rigide sur lequel sont respectivement montés à rotation les jambes Jk, les platines PTk et les premiers moyens de support de charge(s) S1. Par ailleurs, les seconds moyens de couplage MC2 sont ici agencés pour contraindre les roues PTk et les premiers moyens de support de charge(s) S1 à être sensiblement simultanément soit dans leur position rabattue (figure 4), soit dans leur position redressée (figures 1 et 2).

On notera que les premiers moyens de support de charge(s) S1 sont ici agencés sous la forme de deux lames longitudinales de type trans-palette, à titre d'exemple non limitatif.

Dans une variante de réalisation non représentée, les premiers moyens de couplage MC1 pourraient comprendre au moins deux plaques sur lesquelles sont respectivement montées à rotation les jambes Jk et les platines PTk, et les premiers moyens de support de charge(s) S1 pourraient être solidarisés fixement et respectivement à ces plaques.

Dans l'exemple de réalisation illustré sur la figure, le chariot de transport CT est un chariot de course comportant un sac pliable SP, muni éventuellement d'un fond rigide qui dans ce cas fait office de premiers moyens de support de charge S1. Afin de permettre l'accueil de ce sac pliable SP, les jambes Jk sont décalées vers l'arrière (au-dessus des roues Rk). Les extrémités inférieures des jambes Jk sont montées à rotation (suivant la direction transversale) sur des plaques arrière des premiers moyens de couplage MC1, tandis que les platines PTk et les premiers moyens de support de charge(s) S1 sont montés à rotation (suivant la direction longitudinale) sur deux plaques avant des premiers moyens de couplage MC1, via des biellettes BI. En variante, la jambe Jk peut actionner les premiers moyens de couplage MC1 par une liaison directe sous forme de biellettes reliant la partie inférieure de la jambe JK, ou son prolongement, à l'équivalent d'une partie inférieure de jambe, ou son prolongement, positionnée sur la partie avant des premiers moyens de couplage MC1. On notera que ces deux plaques avant MC1 permettent également de supporter le fond (éventuellement rigide) S1 du sac pliable SP ou d'une structure pliable ayant une fonction équivalente de conteneur. On notera également qu'en alternative ou en combinaison, des premiers moyens de support de charge(s) S1 peuvent comporter deux lames longitudinales S1' de type trans-palette dédiées au support de charge(s) et solidarisées aux pieds PDk, à titre d'exemple non limitatif.

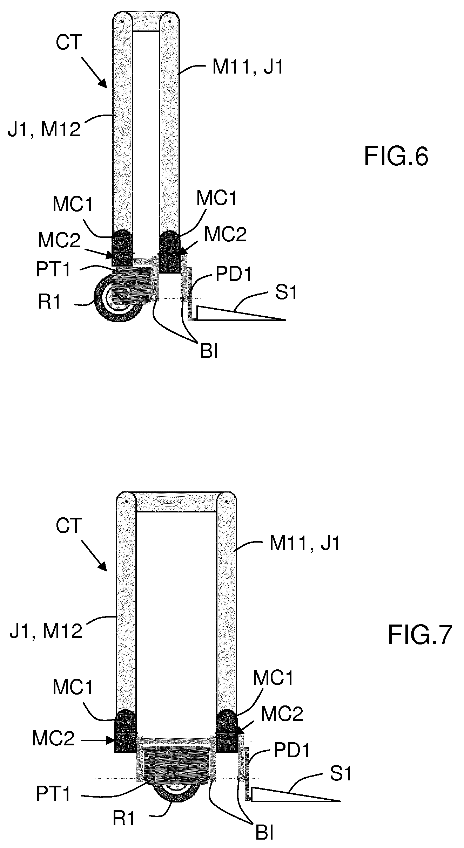

Dans les exemples de réalisation illustrés sur les figures 6 à 10, chaque chariot de transport CT est muni de jambes Jk qui comprennent chacune deux montants Mik (i = 1 ou 2) décalés suivant la direction longitudinale. Chaque montant Mik comporte une extrémité supérieure solidarisée à une partie longitudinale PLk correspondante et une extrémité inférieure couplée à rotation aux premiers moyens de couplage MC1. Les deux montants Mik de chaque jambe Jk participent ainsi avec la partie longitudinale PLk correspondante à la définition d'un parallélépipède déformable dans lequel les montants Mik sont rabattables sensiblement parallèlement à la partie longitudinale PLk.

On comprendra qu'une fois que les montants Mik ont été rabattus parallèlement aux parties latérales PLk, ils sont intégralement contenus dans l'espace qui est défini par l'extension verticale de ces parties latérales PLk. La direction verticale est une direction qui est perpendiculaire aux directions transversale et longitudinale.

Afin de permettre le placement des deux montants Mik d'une jambe Jk dans l'espace qui est défini par l'extension verticale des parties latérales PLk, et donc l'un sensiblement parallèle à l'autre, l'un d'entre eux (par exemple le premier M1 k) peut par exemple être agencé sous la forme d'une lame, tandis que l'autre (par exemple le second M2k) peut par exemple être agencé sous la forme d'une barre munie d'un évidement central destiné à loger une partie au moins de la lame M1k. En variante, les extrémités des deux montants Mik d'une jambe Jk peuvent être légèrement décalées l'une par rapport à l'autre suivant la direction transversale.

Dans l'exemple de la figure 6 le chariot de transport CT est un diable dans lequel les deux montants Mik de chaque jambe Jk comprennent des extrémités inférieures qui sont respectivement montées à rotation (suivant la direction transversale) sur des plaques avant et arrière des premiers moyens de couplage MC1, et les platines PTk et les premiers moyens de support de charge(s) S1 sont montés à rotation (suivant la direction longitudinale) sur les deux plaques avant des premiers moyens de couplage MC1, via des biellettes BI. On notera que les premiers moyens de support de charge(s) S1 sont ici agencés sous la forme de deux lames longitudinales de type trans-palette, à titre d'exemple non limitatif.

Dans l'exemple de la figure 7 le chariot de transport CT est un diable dans lequel les deux montants Mik de chaque jambe Jk comprennent des extrémités inférieures qui sont respectivement montées à rotation (suivant la direction transversale) sur des plaques avant et arrière des premiers moyens de couplage MC1, la platine PTk est montée à rotation (suivant la direction longitudinale) sur une plaque avant des premiers moyens de couplage MC1, via des biellettes BI, et les premiers moyens de support de charge(s) S1 sont montés à rotation (suivant la direction longitudinale) sur les deux plaques avant des premiers moyens de couplage MC1, via des biellettes BI. On notera que les premiers moyens de support de charge(s) S1 sont ici agencés sous la forme de deux lames longitudinales de type trans-palette, à titre d'exemple non limitatif.

Dans les exemples des figures 8 et 9, les chariots de transport CT sont des diables munis de premiers moyens de couplage MC1 qui comprennent deux barres longitudinales faisant partie d'un cadre CD (sensiblement rectangulaire) et sur chacune desquelles sont montées à rotation suivant la direction transversale les extrémités inférieures des deux montants Mik d'une jambe Jk. Par ailleurs, les barres longitudinales des premiers moyens de couplage MC1 comportent chacune une partie avant à laquelle est solidarisée une partie (au moins) des premiers moyens de support de charge(s) S1. De plus, ces barres longitudinales participent à la définition du parallélépipède déformable.

Par exemple, et comme illustré non limitativement sur les figures 8 et 9, les premiers moyens de support de charge(s) S1 peuvent être montés à rotation sur les barres longitudinales des premiers moyens de couplage MC1 afin qu'ils puissent passer d'une position redressée d'accueil de charge(s) à une position rabattue sensiblement parallèle aux jambes Jk (après qu'elles aient été rabattues). On notera que les seconds moyens de couplage MC2 peuvent être avantageusement et également agencés pour contraindre les platines PTk et les premiers moyens de support de charge(s) S1 à être sensiblement simultanément soit dans leur position rabattue, soit dans leur position redressée. On notera également que les premiers moyens de support de charge(s) S1 sont ici agencés sous la forme de deux lames longitudinales de type trans-palette, à titre d'exemple non limitatif.

On notera également, comme évoqué précédemment, que dans les exemples illustrés sur les figures 1 à 9 les premiers moyens de support de charge(s) S1 sont solidarisés à des pieds PDk qui sont destinés à stabiliser le chariot de transport CT lorsqu'il est à l'arrêt en position déployée. Mais cela n'est pas obligatoire. En effet, le chariot de transport CT pourrait comporter non seulement des premiers moyens de support de charge(s) S1, mais également des pieds dédiés à sa stabilisation à l'arrêt et de préférence repliables. Dans cette dernière variante, les premiers moyens de support de charge(s) S1 sont installés au-dessus des pieds PDk.

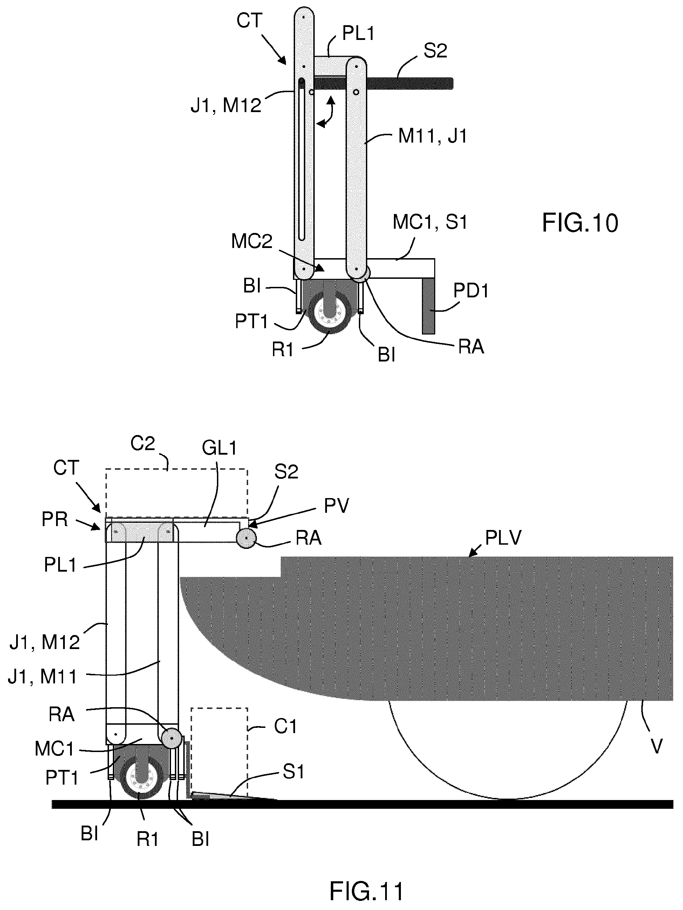

Dans l'exemple de la figure 10, le chariot de transport CT est un diable configurable en chariot de course et muni de premiers moyens de couplage MC1 qui comprennent également deux barres longitudinales faisant éventuellement partie d'un cadre (sensiblement rectangulaire), sur chacune desquelles sont montées à rotation suivant la direction transversale les extrémités inférieures des deux montants Mik d'une jambe Jk, et qui définissent une partie au moins des premiers moyens de support de charge(s) S1. Ces barres longitudinales participent à la définition du parallélépipède déformable. On notera que dans cet exemple des pieds PDk sont avantageusement solidarisés aux extrémités avant des barres longitudinales afin de stabiliser le chariot de transport CT lorsqu'il est à l'arrêt en position déployée. Ces pieds PDk sont de préférence repliables.

On notera également que dans les exemples illustrés sur les figures 8 à 10, les chariots de transport CT comprennent également des seconds moyens de support de charge(s) S2 couplés auxdites parties longitudinales PLk et/ou à certains des montants Mik.

Plus précisément, dans les exemples illustrés sur les figures 8 et 9 les seconds moyens de support de charge(s) S2 sont couplés aux parties longitudinales PLk, éventuellement via des glissières GLk qui peuvent être éventuellement de type télescopique. Ces seconds moyens de support de charge(s) S2 peuvent, par exemple, se présenter sous la forme de deux barres s'étendant suivant une direction longitudinale. Mais cela n'est pas obligatoire. Il pourrait en effet s'agir d'un cadre (éventuellement muni de traverses et/ou longerons de rigidification) ou bien d'un plateau (éventuellement ajouré localement), comme dans les exemples non limitatifs des figures 8 et 9. En variante, on peut d'abord déplier le système de glissières GLk à l'intérieur du véhicule V, puis les seconds moyens de support de charge(s) S2 (par exemple un plateau supérieur) avec sa (ses) charge(s). Ce plateau peut, par exemple, présenter des dimensions pouvant atteindre 600 mm suivant la direction transversale et 500 mm suivant la direction longitudinale. On notera que ces dimensions maximales nécessitent un dimensionnement approprié du chariot de transport CT.

Comme illustré non limitativement sur les figures 8 et 9, le chariot de transport CT peut comprendre d'éventuels moyens de préhension MP facilitant ses déplacements une fois déployé, et son rangement ou son extraction une fois replié. Ces moyens de préhension MP peuvent être solidarisés (directement ou indirectement) aux seconds moyens de support de charge(s) S2 ou aux parties longitudinales PLk. Ils peuvent, comme illustré, comprendre une poignée qui peut être avantageusement rabattue afin d'être intégralement contenue dans l'espace qui est défini par l'extension verticale des parties latérales PLk.

Cette poignée MP peut, par exemple et comme illustré non limitativement, comprendre une barre de préhension BP sensiblement transversale, deux premières barres B1 et deux secondes barres B2. Chaque première barre B1 comprend une première extrémité montée à coulissement dans une ouverture (ou glissière) GL'k qui est définie dans l'une des parties latérales PLk ou dans le plateau des seconds moyens de support de charge(s) S2 (comme illustré) et une seconde extrémité solidarisée à l'une des deux extrémités opposées de la barre de préhension BP. Chaque seconde barre B2 comprend une première extrémité couplée à rotation à une partie intermédiaire de l'une des premières barres B1 et une seconde extrémité couplée à rotation à l'une des parties longitudinales PLk ou au plateau des seconds moyens de support de charge(s) S2 (comme illustré).

Lorsque l'on veut rabattre une telle poignée MP, on pousse sa barre de préhension BP vers la partie avant PV, tout en exerçant sur elle une pression de haut en bas, afin de faire coulisser vers l'avant dans les glissières GL'k les premières extrémités de ses premières barres B1. L'opération inverse doit être effectuée lorsque l'on veut redresser cette poignée MP.

On notera que la poignée MP peut être éventuellement couplée à un mécanisme de verrouillage destiné au moins à la maintenir dans sa position redressée.

On notera également que la poignée MP, et en particulier sa barre de préhension BP, peut être éventuellement amovible, par exemple afin de faciliter l'installation d'un autre chariot de transport à côté de son propre chariot de transport, notamment dans un véhicule V.

On notera également que la position de la poignée MP peut éventuellement influer sur l'état de verrouillage/déverrouillage de certains au moins des éventuels moyens de verrouillage.

Dans l'exemple de la figure 10, les seconds moyens de support de charge(s) S2 sont montés à rotation suivant la direction transversale sur les deux montants arrière M2k afin de pouvoir être soit placés dans une position rabattue entre ces montants arrière M2k, soit placés dans une position redressée sensiblement perpendiculairement aux montants arrière M2k en vue de supporter au moins une charge.

On notera qu'un chariot de transport CT, selon l'invention, peut être introduit et installé dans un véhicule V avec ou sans charge. Ainsi, dans l'exemple illustré sur les figures 11 à 15, le chariot de transport CT (similaire à celui illustré sur la figure 8) est introduit et installé dans le véhicule V avec des première C1 et seconde C2 charges placées respectivement sur ses premiers S1 et seconds S2 moyens de support de charge(s). Mais il pourrait être installé en position repliée sans charge, puis éventuellement recevoir ultérieurement une ou plusieurs charges.

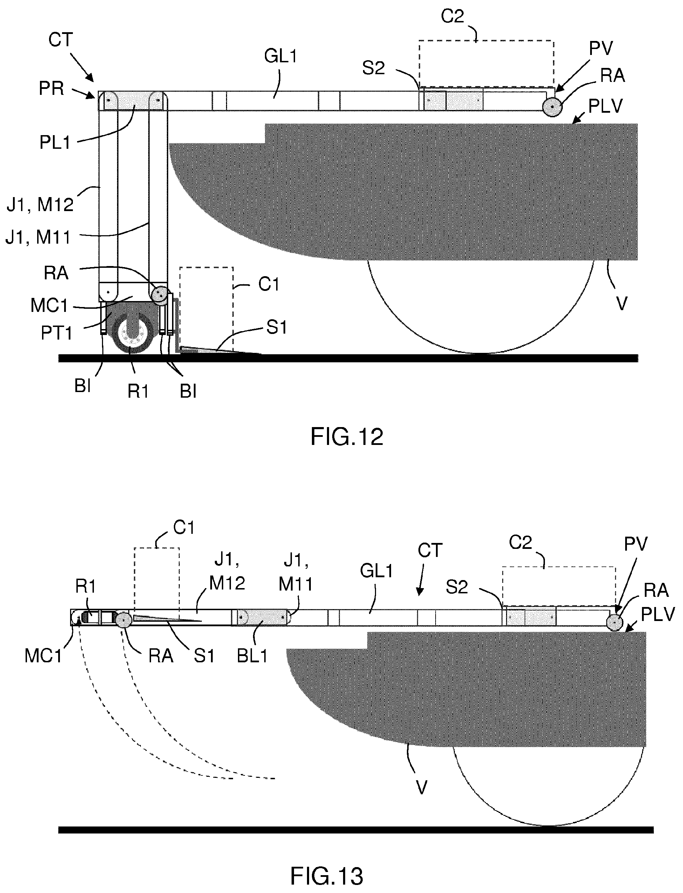

Une fois que la partie arrière du véhicule V est accessible, on pousse le chariot de transport CT vers le véhicule V en faisant pénétrer dans sa partie arrière (ici), au-dessus de son plancher PLV, la partie avant PV de ses seconds moyens de support de charge(s) S2 (voir figure 11). Lorsque les seconds moyens de support de charge(s) S2 sont montés sur des glissières GLk télescopiques et solidarisées aux parties latérales PLk, on translate vers l'avant ces seconds moyens de support de charge(s) S2 en étirant les glissières GLk (voir figure 12). Puis, lorsque les jambes Jk entrent en contact avec le véhicule V, elles sont contraintes de se rabattre vers l'arrière parallèlement aux parties latérales PLk afin d'être intégralement contenues dans l'espace qui est défini par l'extension verticale de ces parties latérales PLk (voir figure 13). Le rabattement des jambes Jk provoque le rabattement simultané des platines PTk et donc des roues Rk, du fait de l'action des seconds moyens de couplage MC2. Ensuite, on pousse les jambes Jk rabattues vers l'avant du véhicule V jusqu'à ce qu'elles parviennent en butée et que les glissières GLk se soient au moins partiellement rétractées afin de réduire au maximum l'extension du chariot de transport CT suivant la direction longitudinale (voir figure 14). Lorsque le chariot de transport CT comprend des moyens de préhension MP, comme illustré, on rabat ces derniers en direction des parties latérales PLk afin qu'ils soient intégralement contenus dans l'espace qui est défini par l'extension verticale de ces parties latérales PLk, éventuellement à l'extérieur de ces dernières (PLk). On notera qu'une fois le chariot de transport CT parvenu dans une position d'immobilisation, de préférence prédéfinie, il peut être éventuellement immobilisé par tout moyen connu de l'homme de l'art, et par exemple grâce à des moyens d'ancrage définis dans le plancher PLV du véhicule V.

Pour procéder à l'extraction du chariot de transport CT hors du véhicule V, on effectue les opérations présentées ci-avant dans le sens inverse, en le tirant au moyen de ses éventuels moyens de préhension MP (après qu'ils aient été redressés). On comprendra que dès que les jambes Jk se retrouvent en porte à faux dans le vide (à l'extérieur du véhicule V), elles commencent à se redresser, ce qui provoque également le redressement automatique des platines PTk et donc des roues Rk.

On notera également que le chariot de transport CT peut être éventuellement pourvu de moyens d'immobilisation destinés à permettre son immobilisation par rapport au véhicule V.

On notera également que lorsque le chariot de transport CT constitue un élément modulaire de faux-plancher de véhicule de type utilitaire, la hauteur de ses jambes Jk est adaptée à la gamme de hauteurs auxquelles sont généralement placés les planchers PLV de ces véhicules. Cette hauteur peut être variable selon les applications envisagées.

On notera également, comme illustré non limitativement sur les figures 8 et 9, que lorsqu'une jambe Jk comprend deux montants Mik, elle peut être équipée d'un moyen d'amortissement MA destiné à limiter la vitesse de ses rabattements et redressements. Par exemple, on peut utiliser un amortisseur MA dont l'une des extrémités est solidarisée à l'un des deux montants (par exemple le premier M1k), par exemple au voisinage de son extrémité supérieure (voisine d'une partie latérale PLk), tandis que l'autre extrémité est solidarisée à l'autre montant (par exemple le second M2k), par exemple au voisinage de son extrémité inférieure.

On notera également, comme illustré non limitativement sur les figures 8 et 9, que lorsque les jambes Jk comprennent deux montants Mik, il est préférable que le chariot de transport CT comprenne un mécanisme de verrouillage destiné à verrouiller chacune de ses jambes Jk au moins lorsqu'elles sont en position redressée (et donc prêtes à supporter des charges). Il est également possible d'équiper les roues Rk de moyens de freinage et/ou de blocage (éventuellement de leur indexation lorsqu'elles sont montées pivotantes). Il est également possible d'équiper le chariot de transport CT de moyens sécuritaires complémentaires destinés à éviter son repliement intempestif en cours de manipulation.

On notera également qu'afin de faciliter les translations du chariot de transport CT replié, vers l'avant ou l'arrière, sur un plancher PLV, ses éventuels seconds moyens de support de charge(s) S2 et/ou ses premiers moyens de couplage MC1 ou son éventuel cadre CD peuvent, comme illustré non limitativement sur les figures 10 à 14, être équipés de roulettes auxiliaires RA dont la surface de roulement dépasse très légèrement afin de ne pas augmenter l'encombrement vertical de façon significative.

On notera également qu'afin de faciliter le pivotement des roues Rk sous charge on peut utiliser des roues à galets omnidirectionnelles, avec comme condition le fait que l'axe de rotation des galets doit être sensiblement parallèle à l'axe de rotation permettant l'inclinaison latérale des roues. De préférence, l'axe de rotation longitudinal des roues Rk est positionné au plus près du sol, voire quasiment en coïncidence avec la zone de contact de la roue Rk. De plus cela procure dans les exemples illustrés sur les figures 1 à 6 une solution de roulage pour manipuler le chariot en position pliée (comme une valise), sachant que les roues Rk sont perpendiculaires au sens du mouvement et donc qu'il devient possible de rouler sur le sol grâce aux galets.

On notera également que le chariot de transport CT peut comprendre, d'une part, au moins un moteur électrique (non représenté) propre à entraîner en rotation les jambes Jk afin de les faire passer d'une position redressée, adaptée au support, à une position rabattue, et inversement, et, d'autre part, une batterie (non représentée) propre à alimenter chaque moteur électrique en énergie électrique. Cette option est destinée à permettre l'automatisation du déploiement et du repliement du chariot de transport CT.

On notera également que le chariot de transport CT peut éventuellement comprendre au moins une première prise électrique qui est destinée à être raccordée à une deuxième prise électrique d'alimentation installée dans le véhicule V et par exemple couplée au circuit d'alimentation électrique dudit véhicule V.

Cette première prise électrique peut être directement couplée à un ou plusieurs équipements électriques qui font éventuellement partie des seconds moyens de support de charge(s) S2 et/ou des premiers moyens de couplage MC1 ou de l'éventuel cadre CD, comme par exemple une éventuelle batterie (afin de la recharger, éventuellement via un convertisseur basse tension (typiquement 12 V ou 24 V)). Par exemple, la deuxième prise électrique d'alimentation peut être installée dans une zone du véhicule V destinée à accueillir la partie avant PV (ou arrière PR) du chariot de transport CT. Dans ce cas, la première prise électrique peut, par exemple, être installée sur la partie avant PV des seconds moyens de support de charge(s) S2 afin de pouvoir être automatiquement accouplée à la deuxième prise électrique d'alimentation lorsque son chariot de transport CT est dans une position d'installation prédéfinie.

On notera également que le chariot de transport CT peut être pourvu de moyens d'ancrage ou d'arrimage, comme par exemple des taquets ou des crochets ou encore des rails ou rainures, destinés à permettre l'ancrage ou l'arrimage de charges sur ses premiers S1 et/ou seconds S2 moyens de support de charge(s).

On notera également que le véhicule V (et notamment sa partie arrière) peut être éventuellement agencé de manière à recevoir au moins un chariot de transport CT après qu'il ait été configuré dans une position repliée de rangement. Dans ce cas, il comprend au moins une zone d'installation prédéfinie, c'est-à-dire aménagée de manière à accueillir un chariot de transport CT en vue de son immobilisation. Le véhicule V peut éventuellement comprendre deux zones d'installation longitudinales parallèles entre elles et auxquelles on accède par l'arrière du véhicule V, ou bien une zone d'installation longitudinale à laquelle on accède par l'arrière du véhicule V et une zone d'installation transversale à laquelle on accède par un côté latéral du véhicule.

Une zone d'installation peut éventuellement comporter un arrêt de charge, ou bien être définie dans un renfoncement dédié du plancher PLV (dans ce cas le chariot de transport CT peut éventuellement définir un faux-plancher). Par ailleurs, une zone d'installation peut éventuellement comporter des moyens de guidage et/ou des moyens de verrouillage destinés à immobiliser les éventuels moyens de préhension MP dans leur position rabattue.

Ce faux-plancher auquel peut s'intégrer un système de rails carrossier peut être exploité de différentes façons, et notamment :
- en tant que plateau supérieur conventionnel de transport de charge,
- en tant que plancher équipé d'aménagements professionnels dédiés, par exemple pour un véhicule utilitaire,
- en tant que plancher équipé d'équipements de carrosserie de type siège individuel, chaise roulante, tablette, et analogue.

L'invention offre plusieurs avantages, et notamment :
- la possibilité de plier/déplier le chariot de transport verticalement ou horizontalement avec ses roues restant au contact du sol,
- la possibilité de plier le chariot de transport en version diable avec une charge restant posée sur le sol,
- la possibilité de plier/déplier les jambes en conservant la charge en place,
- la possibilité d'ajouter un plateau (ou cadre) supérieur soit en version amovible soit en version coulissante, elle-même compatible avec une possibilité d'embarquement/débarquement dans un véhicule au niveau du plancher arrière.

L'invention ne se limite pas aux modes de réalisation de chariot de transport et de véhicule décrits ci-avant, seulement à titre d'exemple, mais elle englobe toutes les variantes que pourra envisager l'homme de l'art dans le cadre des revendications ci-après.

## Revendications

1. Chariot de transport (CT), comprenant une paire de jambes (Jk) comportant chacune une extrémité inférieure à laquelle est couplée une platine (PTk) sur laquelle est montée à rotation suivant une direction transversale au moins une roue (Rk), et des premiers moyens de support de charge(s) (S1) couplés auxdites extrémités inférieures des jambes (Jk), ledit chariot (CT) comprenant en outre i) des premiers moyens de couplage (MC1) sur lesquels sont montées à rotation lesdites extrémités inférieures des jambes (Jk) suivant ladite direction transversale de sorte qu'elles puissent passer d'une position redressée à une position rabattue, et lesdites platines (PTk) de sorte que leurs roues (Rk) puissent pivoter sous charge et passer d'une position redressée à une position rabattue sensiblement parallèle auxdites jambes (Jk) rabattues, et ii) des seconds moyens de couplage (MC2) agencés pour contraindre lesdites jambes (Jk) et lesdites roues (Rk) à être sensiblement simultanément soit dans leur position rabattue, soit dans leur position redressée, et lesdites roues (Rk) étant propres à pivoter sous charge suivant un axe de rotation longitudinal positionné près du sol, **caractérisé en ce que** lesdits seconds moyens de couplage (MC2) comportent une structure de Sarrus couplée aux extrémités inférieures desdites jambes (Jk), **en ce que** lesdits premiers moyens de support de charge(s) (S1) sont agencés sous la forme d'une plaque en forme générale de U, **en ce que** lesdits premiers moyens de couplage (MC1) comprennent deux charnières comportant chacune une première partie (P11) solidarisée fixement à l'extrémité inférieure de l'une desdites jambes (Jk) et une seconde partie (P12) montée à rotation sur ladite première partie (P11) et sur laquelle est montée à rotation une extrémité de ladite plaque (S1), et **en ce que** lesdits seconds moyens de couplage (MC2) comportent deux articulations comportant chacune une première partie (P21) montée à rotation sur la première partie (P11) de l'une des charnières (MC1), une deuxième partie (P22) montée à rotation sur ladite première partie (P21) et une troisième partie (P23) montée à rotation sur la deuxième partie (P22) et sur laquelle sont montées à rotation l'une desdites platines (PTk) et une autre extrémité de ladite plaque (S1).

2. Chariot selon la revendication 1, **caractérisé en ce qu'**il comprend deux pieds (PDk) associés respectivement auxdites platines (PLk) et agencés pour stabiliser ledit chariot (CT) lorsqu'il est à l'arrêt.

3. Chariot selon la revendication 2, **caractérisé en ce que** lesdits premiers moyens de support de charge(s) (S1) sont solidarisés auxdits pieds (PDk).

4. Chariot selon l'une des revendications 1 à 3, **caractérisé en ce que** lesdits pieds (PDk) sont montés à rotation sur lesdits premiers moyens de couplage (MC1) de sorte qu'ils puissent passer d'une position redressée adaptée à la stabilisation à une position rabattue sensiblement parallèle auxdites jambes (Jk) rabattues.

5. Chariot selon la revendication 4, **caractérisé en ce que** lesdits seconds moyens de couplage (MC2) sont agencés pour contraindre lesdites platines (PTk) et lesdits pieds (PDk) à être sensiblement simultanément soit dans leur position rabattue, soit dans leur position redressée.

6. Chariot selon la revendication 1 à 5, **caractérisé en ce que** chaque platine (PTk) est couplée auxdits premiers moyens de couplage (MC1) via un mécanisme de redressement de type Scott-Russell.

7. Chariot selon l'une des revendications 1 à 6, **caractérisé en ce que** lesdits premiers moyens de support de charge(s) (S1) sont montés à rotation sur lesdits premiers moyens de couplage (MC1) de sorte qu'ils puissent passer d'une position redressée sensiblement perpendiculaire auxdites jambes (Jk) à une position rabattue sensiblement parallèle auxdites jambes (Jk) rabattues.

8. Chariot selon l'une des revendications 1 à 6, **caractérisé en ce que** lesdits premiers moyens de couplage (MC1) comprennent au moins deux plaques sur lesquelles sont respectivement montées à rotation lesdites jambes (Jk) et lesdites platines (PTk), et **en ce que** lesdits premiers moyens de support de charge(s) (S1) sont solidarisés fixement auxdites plaques.

9. Chariot selon l'une des revendications 1 à 8, **caractérisé en ce que** lesdits premiers moyens de support de charge(s) (S1) sont agencés sous la forme de deux lames.

10. Chariot selon l'une des revendications 1 à 6, **caractérisé en ce que** chaque jambe (Jk) comprend deux montants (Mik), d'une part, comportant chacune une extrémité supérieure solidarisée à une partie longitudinale (PLk) correspondante et une extrémité inférieure couplée à rotation auxdits premiers moyens de couplage (MC1), et, d'autre part, participant avec cette partie longitudinale (PLk) à la définition d'un parallélépipède déformable dans lequel lesdits montants (Mik) sont rabattables sensiblement parallèlement à ladite partie longitudinale (PLk).

11. Chariot selon l'une des revendications 1 à 10, **caractérisé en ce qu'**il constitue un élément modulaire de faux-plancher de véhicule (V).

## Patentansprüche

1. Transportwagen (CT), der ein Paar Beine (Jk) umfasst, die jeweils ein unteres Ende umfassen, mit dem eine Platte (PTk) gekoppelt ist, auf die in Drehung entlang einer Querrichtung mindestens ein Rad (Rk) installiert ist, und erste Mittel zum Tragen von Last(en) (S1), die mit den unteren Enden der Beine (Jk) gekoppelt sind, wobei der Wagen (CT) außerdem i) erste Koppelmittel (MC1) umfasst, auf welche in Drehung die unteren Enden der Beine (Jk) gemäß der Querrichtung derart installiert sind, dass sie von einer aufgerichteten Position zu einer zurückgeklappten Position übergehen können, und wobei die Platten (PTk) derart, dass ihre Räder (Rk) unter Last schwenken und von einer aufgerichteten Position zu einer zurückgeklappten Position übergehen können, die im Wesentlichen zu den zurückgeklappten Beinen (Jk) parallel ist, und ii) zweite Koppelmittel (MC2), die eingerichtet sind, um die Beine (Jk) und die Räder (Rk) zu zwingen, im Wesentlichen gleichzeitig entweder in ihrer zurückgeklappten Position oder in ihrer aufgerichteten Position zu sein, und wobei die Räder (Rk) unter Last entlang einer Längsrotationsachse, die nahe dem Boden positioniert ist, schwenken können, **dadurch gekennzeichnet, dass** die zweiten Koppelmittel (MC2) eine Sarrus-Struktur umfassen, die mit den unteren Enden der Beine (Jk) gekoppelt ist, dass die ersten Tragmittel von Last(en) (S1) in der Form einer Platte in allgemeiner U-Form eingerichtet sind, dass die ersten Koppelmittel (MC1) zwei Scharniere umfassen, die jeweils einen ersten Teil (P11) umfassen, der fest mit dem unteren Ende eines der Beine (Jk) verbunden ist, und einen zweiten Teil (P12), der in Drehung auf dem ersten Teil (P11) installiert ist und auf den in Drehung ein Ende der Platte (S1) installiert ist, und dass die zweiten Koppelmittel (MC2) zwei Gelenke umfassen, die jeweils einen ersten Teil (P21) umfassen, der in Drehung auf dem ersten Teil (P11) eines der Scharniere (MC1) installiert ist, und einen zweiten Teil (P22), der in Drehung auf dem ersten Teil (P21) installiert ist, und einen dritten Teil (P23), der in Drehung auf dem zweiten Teil (P22) installiert ist, und auf dem in Drehung eine der Platten (PTk) und ein anderes Ende der Platte (S1) installiert sind.

2. Wagen nach Anspruch 1, **dadurch gekennzeichnet, dass** er zwei Füße (PDk) umfasst, die jeweils zu den Platten (PLk) gehören und die eingerichtet sind, um den Wagen (CT) zu stabilisieren, wenn er stillsteht.

3. Wagen nach Anspruch 2, **dadurch gekennzeichnet, dass** die ersten Tragmittel von Last(en) (S1) fest mit den Füßen (PDk) verbunden sind.

4. Wagen nach einem der Ansprüche 1 bis 3, **dadurch gekennzeichnet, dass** die Füße (PDk) in Drehung auf den ersten Kopplungsmitteln (MC1) derart installiert sind, dass sie von einer aufgerichteten Position, die zur Stabilisierung geeignet ist, auf eine zurückgeklappte Position im Wesentlichen parallel zu den zurückgeklappten Beinen (Jk) übergehen können.

5. Wagen nach Anspruch 4, **dadurch gekennzeichnet, dass** die zweiten Koppelmittel (MC2) eingerichtet sind, um die Platten (PTk) und die Füße (PDk) zu zwingen, im Wesentlichen gleichzeitig in ihrer zurückgeklappten oder in ihrer aufgerichteten Position zu sein.

6. Wagen nach Anspruch 1 bis 5, **dadurch gekennzeichnet, dass** jede Platte (PTk) mit den ersten Koppelmitteln (MC1) über einen Aufrichtmechanismus des Typs Scott-Russell gekoppelt ist.

7. Wagen nach einem der Ansprüche 1 bis 6, **dadurch gekennzeichnet, dass** die ersten Tragmittel von Last (en) (S1) in Drehung auf den ersten Koppelmitteln (MC1) derart installiert sind, dass sie von einer aufgerichteten Position, die zu den Beinen (Jk) im Wesentlichen senkrecht ist, zu einer zurückgeklappten Position, die zu den zurückgeklappten Beinen (Jk) im Wesentlichen parallel ist, übergehen können.

8. Wagen nach einem der Ansprüche 1 bis 6, **dadurch gekennzeichnet, dass** die ersten Koppelmittel (MC1) mindestens zwei Platten umfassen, auf welchen jeweils in Drehung die Beine (Jk) und die Platten (PTk) installiert sind, und dass die ersten Tragmittel von Last(en) (S1) fest mit den Platten verbunden sind.

9. Wagen nach einem der Ansprüche 1 bis 8, **dadurch gekennzeichnet, dass** die ersten Tragmittel von Last(en) (S1) in der Form von zwei Klingen installiert sind.

10. Wagen nach einem der Ansprüche 1 bis 6, **dadurch gekennzeichnet, dass** jedes Bein (Jk) zwei Ständer (Mik) einerseits umfasst, die jeweils ein oberes Ende umfassen, das fest mit einem entsprechenden Längsteil (PLk) verbunden ist, und ein unteres Ende, das in Drehung mit den ersten Koppelmitteln (MC1) gekoppelt ist und, andererseits, mit diesem Längsteil (PLK) an der Definition eines verformbaren Parallelepipeds teilnehmen, indem die Ständer (Mik) im Wesentlichen parallel zu dem Längsteil (PLk) zurückklappbar sind.

11. Wagen nach einem der Ansprüche 1 bis 10, **dadurch gekennzeichnet, dass** er ein modulares Element eines Zwischenbodens eines Fahrzeugs (V) bildet.

## Claims

1. A transport trolley (CT), including a pair of legs (Jk) each comprising a lower end to which there is coupled a plate (PTk) on which at least one wheel (Rk) is mounted so as to rotate in a transverse direction, and first load supporting means (S1) coupled to said lower ends of the legs (Jk), said trolley (CT) furthermore including i) first coupling means (MC1) on which the said lower ends of the legs (Jk) are mounted so as to rotate in the said transverse direction such that they can move from a folded-out position to a folded-away position, and the said plates (PTk) such that their wheels (Rk) can pivot under load and move from a folded-out position to a folded-away position substantially parallel to the said folded-away legs (Jk), and ii) second coupling means (MC2) designed to force the said legs (Jk) and the said wheels (Rk) to be substantially simultaneously either in their folded-away position or in their folded-out position, and the said wheels (Rk) being suited to pivot under load along a longitudinal rotation axis positioned close to the ground, **characterized in that** the said second coupling means (MC2) comprise a Sarrus structure coupled to the lower ends of the said legs (Jk), **in that** the said first load supporting means (S1) are designed in the form of a sheet of general U-shape, **in that** said first coupling means (MC1) include two hinges each comprising a first part (P11) fixedly secured to the lower end of one of the said legs (Jk) and a second part (P12) rotatably mounted on said first part (P11) and on which there is rotatably mounted an end of the said sheet (S1), and **in that** the said second coupling means (MC2) comprise two articulations each comprising a first part (P21) rotatably mounted on the first part (P11) of one of the hinges (MC1), a second part (P22) rotatably mounted on the said first part (P21) and a third part (23) rotatably mounted on the second part (P22) and on which there are rotatably mounted one of the said plates (PTk) and another end of the said sheet (S1).

2. The trolley according to Claim 1, **characterized in that** it includes two feet (PDk) associated respectively to the said plates (PLk) and designed to stabilize the said trolley (CT) when it is at a standstill.

3. The trolley according to Claim 2, **characterized in that** the said first load supporting means (S1) are secured to the said feet (PDk).

4. The trolley according to one of Claims 1 to 3, **characterized in that** the said feet (PDk) are rotatably mounted on the said first coupling means (MC1) such that they can move from a folded-out position adapted to the stabilisation to a folded-away position substantially parallel to the said folded-away legs (Jk).

5. The trolley according to Claim 4, **characterized in that** the said second coupling means (MC2) are designed to force the said plates (PTk) and the said feet (PDk) to be substantially simultaneously either in their folded-away position or in their folded-out position.

6. The trolley according to Claim 1 to 5, **characterized in that** each plate (PTk) is coupled to the said first coupling means (MC1) via a folding-out mechanism of the Scott-Russell type.

7. The trolley according to one of Claims 1 to 6, **characterized in that** the said first load supporting means (S1) are rotatably mounted on the said first coupling means (MC1) such that they can move from a folded-out position substantially perpendicular to the said legs (Jk) to a folded-away position substantially parallel to the said folded-away legs (Jk)

8. The trolley according to one of Claims 1 to 6, **characterized in that** the said first coupling means (MC1) include at least two sheets on which there are respectively rotatably mounted the said legs (Jk) and the said plates (PTk), and **in that** the said first load supporting means (S1) are secured fixedly to the said sheets.

9. The trolley according to one of Claims 1 to 8, **characterized in that** the said first load supporting means (S1) are designed in the form of two blades.

10. The trolley according to one of Claims 1 to 6, **characterized in that** each leg (Jk) includes two uprights (Mik), on the one hand, each comprising an upper end secured to a corresponding longitudinal part (PLk) and a lower end rotatably coupled to the said first coupling means (MC1), and, on the other hand, together with this longitudinal part (PLk), defining a deformable parallelepiped in which the said uprights (Mik) can be folded away substantially parallel to the said longitudinal part (PLk).

11. The trolley according to one of Claims 1 to 10, **characterized in that** it constitutes a modular false floor element of a vehicle (V).
